Europäisches Patentamt

**European Patent Office**

**Office européen des brevets**

(19)

(11) Veröffentlichungsnummer: **0 167 654**
**B1**

(12) **EUROPÄISCHE PATENTSCHRIFT**

(45) Veröffentlichungstag der Patentschrift:
**28.12.88**

(51) Int. Cl.⁴: **F 16 D 3/62**

(21) Anmeldenummer: **84108215.9**

(22) Anmeldetag: **12.07.84**

(54) **Kardanische Laschenkupplung und deren Verwendung.**

(43) Veröffentlichungstag der Anmeldung:
**15.01.86 Patentblatt 86/3**

(45) Bekanntmachung des Hinweises auf die Patenterteilung:
**28.12.88 Patentblatt 88/52**

(84) Benannte Vertragsstaaten:
**AT BE CH DE FR GB IT LI NL SE**

(56) Entgegenhaltungen:
**CH-A- 436 869**
**DE-A- 2 029 173**
**DE-C- 507 579**
**FR-A- 1 010 052**
**GB-A- 541 221**
**US-A- 1 752 138**
**US-A- 2 073 852**

(73) Patentinhaber: **WOCO Franz-Josef Wolf & Co.,**
**Sprudelallee 19, D-6483 Bad Soden-Salmünster (DE)**

(72) Erfinder: **Wolf, Franz-Josef, Sprudelallee 19, D-6483 Bad Soden-Salmünster (DE)**
Erfinder: **Pletsch, Hubert, Am Quellenrain 13, D-6483 Bad Soden-Salmünster (DE)**
Erfinder: **Benneyan, Gregoire, Huttenheegstrasse 2, D-6483 Bad Soden-Salmünster (DE)**

(74) Vertreter: **Jaeger, Klaus, Dipl.-Chem. Dr. et al, Jaeger, Steffens & Köster Patentanwälte Pippinplatz 4a, D-8035 München-Gauting (DE)**

ACTORUM AG

## Beschreibung

Die Erfindung betrifft eine kardanische Laschenkupplung der im Oberbegriff des Anspruchs 1 genannten Art.

Laschenkupplungen der in Rede stehenden Art dienen der drehelastischen, axial schub- und zugelastischen sowie axial knickelastischen sowie schwingungsisolierenden Übertragung von Drehmomenten und finden insbesondere im Kraftfahrzeugbau Verwendung.

Bei bekannten Kupplungen ist jeweils jeder Zapfen einer Kupplungshälfte mit jeweils jedem der beiden benachbarten Zapfen der anderen Kupplungshälfte durch Laschen verbunden, und zwar in der Weise, dass die gesamte Kupplung nach Art einer in sich geschlossenen Bolzenkette oder Buchsenkette ausgebildet ist. Die einzelnen Laschen sind auf den Zapfen entweder spielfrei oder nur mit sehr geringem Spiel vernietet. Als Bewehrung der Laschen dienen Kunststofffasern, Kunststofffäden oder Kunststoffgewebe sowie Drähte oder Drahtgewebe.

Nachteilig an den bekannten Kupplungen, insbesondere bei deren Verwendung im Antriebsstrang von Kraftfahrzeugen, ist deren geringe Standzeit. Dies ist auf die hohe mechanische und elastische Belastung der Laschen zurückzuführen, die selbst bei Normalbetrieb der Kupplung in jeder der beiden Drehrichtungen stets auf Zug und Druck beansprucht werden. Zusätzlich werden die Laschen bei Abknickung der Antriebs- und der Abtriebswelle gegeneinander sowie bei koaxialer Zug- und Schubversetzung der beiden Wellen gegeneinander mit beachtlichen Querkräften, insbesondere Zugkomponenten, belastet. Dies führt insgesamt zum raschen Ermüden des Laschenwerkstoffs Gummi, wobei dieser Verschleiss durch die unelastische Bewehrung verstärkt wird. Insbesondere bewirkt jede Knikkung der beiden Wellenachsen gegeneinander eine Biegeverformung der auf die Zapfen der Kupplungshälften aufgenieteten elastischen Verbindungslaschen.

Weiterhin sind aus der GB 541 221 A und der DE 2 029 173 A1 (aus der die im Oberbegriff des Anspruchs 1 aufgeführten Merkmale bekannt sind) Laschenkupplungen bekannt, bei denen jeder der Zapfen der einen Kupplungshälfte nur mit einem der beiden benachbarten in der gleichen Radialebene liegenden Zapfen der zweiten Kupplungshälfte durch elastische Laschen verbunden ist. Durch die Einzelverbindung wird erreicht, dass die Gummilaschen, die die beiden Kupplungshälften miteinander verbinden, gemeinsam insgesamt jeweils nur einer elastischen Beanspruchung und Verformung ausgesetzt werden. Im Gegensatz zu den geschlossenen Laschenketten haben die einzelnen Laschen also keine Verbindung untereinander. Durch diese Anordnung entfällt zwar auf die einzelne Lasche ein relativ höherer Anteil des insgesamt zu übertragenden Drehmoments, jedoch kann durch eine Verminderung der Walkbelastung der Laschen die Standzeit und die Flexibilität der Kupplung erhöht werden. Die

aus der DE 2 029 173 A1 bekannten Laschen sind darüber hinaus noch mit elastischen Fäden oder Bändern bewehrt, wodurch das Laschenmaterial weiter entlastet wird.

Nachteilig bei diesen Laschenkupplungen ist, dass bei axialer Verschiebung der beiden mittels der Kupplung verbundenen Wellen die Laschen weiteren erheblichen Walkbelastungen ausgesetzt sind, die zur raschen Materialermüdung führen. Ebenso ist die Montage/Demontage der Laschen aufgrund ihrer Befestigung mittels Schrauben oder splintgesicherter Bolzen mühsam und zeitaufwendig.

Angesichts dieses Standes der Technik liegt der Erfindung die Aufgabe zugrunde, eine kardanische Laschenkupplung der eingangs genannten Art zu schaffen, die durch eine verbesserte axialgelenkige Anlenkung der Laschen an die Zapfen eine signifikant verbesserte Standzeit aufweist und Montageerleichterungen mit sich bringt.

Zur Lösung dieser Aufgabe schlägt die Erfindung eine kardanische Laschenkupplung vor, die die im kennzeichnenden Teil des Anspruchs 1 genannten Merkmale aufweist.

Erfindungsgemäss sind die Zapfen im Bereich des Angriffs der Laschen mit einer rotationssymmetrisch konkaven Oberfläche ausgebildet, haben also zumindest im wesentlichen die Form eines einschaligen Rotationshyperboloids. Bei flächenkomplementärer Ausbildung der Innenfläche der Öse, mit der die elastische Lasche über einen solchen Zapfen geknüpft ist, wird dadurch eine, bezogen auf die Kupplung, axial gelenkige Anlenkung der Lasche an den Zapfen erreicht. Bei axialer Abstandsänderung von zwei durch eine Lasche miteinander verbundenen Zapfen relativ zueinander durch axiale Abstandsänderungen der Wellen der beiden Kupplungshälften oder durch eine Verwinklung der beiden Kupplungshälften gegeneinander unterliegt die Lasche durch diese gelenkige Anlenkung an den Zapfen kaum noch einer Walkarbeit, sondern vermag die, auf die Kupplung bezogen, axiale Verformung, also die auf die Lasche einwirkenden Querkräfte gelenkig auszugleichen, und zwar an beiden Anlenkungszapfen, und unterliegt dadurch selbst in extremen Belastungsfällen ausschliesslich einer materialschonenden reinen Zugbeanspruchung. Diese Torus-Hyperboloid-Anlenkung der Lasche an den Zapfen trägt daher wesentlich zur Verlängerung der Betriebslebensdauer der kardanischen Kupplung bei.

Ein weiterer Vorteil der Torus-Hyperboloid-Anlenkung der Lasche an den Kupplungszapfen liegt darin, dass sowohl bei der Montage der Kupplung als auch zu Reparaturzwecken die Lasche durch einfaches Aufknüpfen und Abknüpfen mit dem Zapfen gelenkig verbindbar bzw. aus dieser Verbindung lösbar ist.

Aus Gründen der Sicherheit bei Grenzbelastung bzw. Belastung über die vorgesehene Belastungsgrenze der Kupplung hinaus sind die elastischen Laschen vorzugsweis bewehrt, insbesondere mit einer in sich geschlossenen Gliederkette aus Stahl, die vom elastischen Werkstoff der Lasche vollständig umschlossen ist. Mit anderen Worten, die Gliederkette, die vorzugsweise eine Buchsenkette oder Bolzenkette ist, ist vollständig in die Gummilasche einvulkanisiert. Um dabei einen relativ grossen Dehungsbereich und Elastizitätsbereich der Lasche zu gewährleisten, ohne deren Sicherheit zu gefährden und ohne das elastische Material im Ösenauflagenbereich übermässig zu komprimieren und zu belasten, verläuft die Gliederkette im entspannten Zustand der Lasche zwischen den Ösenauflagebereichen vorzugsweise gewinkelt. Bei Dehnung der Lasche unter Zug vermag sich also die Gliederkette zu strecken, kann also die Gummilasche ihre volle Elastizität wirksam beibehalten, ohne dass durch ein vorzeitiges Spannen der Kette ein starrer Formschluss zwischen den beiden Kupplungshälften in Lastrichtung eintritt.

Zur Erhöhung der übertragbaren Drehmomente können die Laschen selbstverständlich auch dicker und beispielsweise mit zwei oder drei in axialer Richtung, bezogen auf die Kupplung, hintereinanderliegenden Ketten bewehrt sein. Alternativ können auch die Zapfen als Doppelzapfen ausgebildet sein und jeweils zwei oder bei Bedarf auch mehrere radial zueinander parallel liegende Laschen aufnehmen, die dann jedoch vorzugsweise so anogeordnet sind, dass sie sich bei unbelasteter Kupplung nicht berühren.

Um den durch die kardanische Laschenkupplung gemäss der Erfindung verfügbare hohe Flexibilität und Elastizität der Kupplung in allen drei räumlichen Freiheitsgraden wirklich optimal ausnutzen und zusätzlich zur Zentrierung betragen zu können, sind die beiden Kupplungshälften vorzugsweise durch ein an sich bekanntes Zentrierlager miteinander verbunden, bei dem die Zentrierlagerbuchse mit einem Elastomer ausgekleidet ist und bei dem gemäss einer Ausgestaltung der Erfindung der Zentrierlagerbolzen vorzugsweise ausgeprägt tonnenförmig oder birnenförmig, eiförmig oder gegebenenfalls auch kugelförmig ausgebildet ist.

Die Laschenkupplung kann prinzipiell überall dort eingesetzt werden, wo bei der Drehmomentübertragung eine Schwingungsisolierung erforderlich ist und wo Wellen miteinander verbunden werden müssen, die nicht immer in allen drei räumlichen Freiheitsgraden fluchten. Insbesondere eignet sich die Laschenkupplung der Erfindung jedoch zum Einbau in den Antriebsstrang von Kraftfahrzeugen sowie bei Antrieben, die hohen Stossbelastungen ausgesetzt sind, z.B. bei Baumaschinen.

Die Erfindung ist im folgenden anhand von Ausführungsbeispielen in Verbindung mit den Zeichnungen näher erläutert. Es zeigen:

Fig. 1 in axialer Draufsicht ein Ausführungsbeispiel der kardanischen Kupplung, teilweise weggebrochen;
Fig. 2 in Teildarstellung einen Schnitt nach II–II in Fig. 1 (Zapfen ungeschnitten); und

Fig. 3 in Teildarstellung einen Axialschnitt nach III–III in Fig. 1.

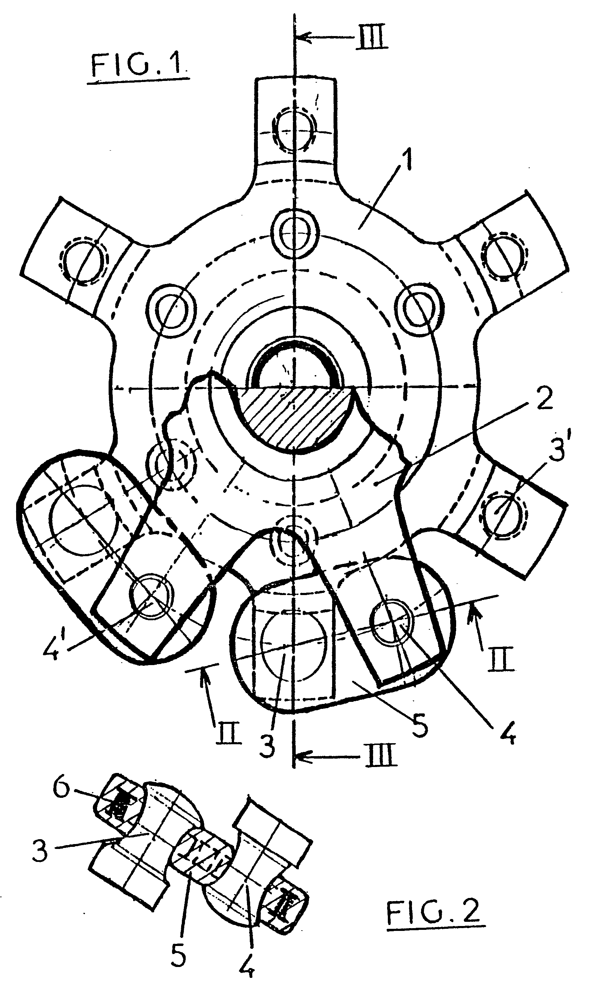

Bei dem in den Figuren 1 bis 3 gezeigten Ausführungsbeispiel der kardanischen Kupplung gemäss der Erfindung weist jede der beiden Kupplungshälften 1, 2 jeweils sechs Zapfen 3, 4 auf. Statt der in den Figuren gezeigten zweimal sechs Zapfen kann die Kupplung je nach den Erfordernissen des Anwendungsfalles selbstverständlich auch mit zweimal vier oder zweimal acht Zapfen versehen sein. Auf jeder der beiden Kupplungshälften 1, 2 sind die sechs Zapfen 3, 4 jeweils mit gleichem Winkelabstand voneinander angeordnet. Jeder der sechs Zapfen 3 ist jeweils mit einem der sechs Zapfen 4 durch eine elastisch dehnbare scheibenförmige Gummilasche 5 verbunden. Jeder der Zapfen 3, 4 weist im Angriffsbereich der Lasche 5 einen roationssymmetrisch konkaven Aussenmantel auf, hat also im wesentlichen im Angriffs- oder Lagerbereich der Lasche 5 die Form eines einschaligen Hyperboloids. Jede der Gummilaschen 5 ist mit einer Öse oder einer durchgehenden Öffnung versehen, deren Innenfläche zur Mantelfläche der Zapfen 3, 4 komplementär ausgebildet ist, im hier beschriebenen Ausführungsbeispiel also der Innenfläche eines Torus mit nicht kreisförmigem Querschnitt entspricht. Diese Öffnungen in den Gummilaschen 5 sind so bemessen, dass die Gummilaschen 5 auf die Zapfen 3, 4 aufknöpfbar sind und dass die Öffnungen nach dem Aufknöpfen der Lasche flächenbündig an den Mantelflächen der Zapfen anliegen.

In der aus Fig. 1 ersichtlichen Weise ist der Abstand der beiden Öffnungen in der Gummilasche 5 voneinander so bemessen, dass im unbelasteten Zustand der Kupplung, also bei entspannter Gummilasche 5, der Abstand zwischen den durch jeweils eine Gummilasche 5 miteinander verbundenen Zapfen 3, 4 kleiner ist als der Abstand des Zapfens 3 vom zweiten benachbarten Zapfen 4' bzw. als der Abstand des Zapfens 4 vom zweiten benachbarten Zapfen 3'. Diese Verschiebung aus der Winkelmittellage jedes Zapfens relativ zu seinen beiden benachbarten Zapfen, d.h. der Abstand der beiden Knüpföffnungen in der Gummilasche 5 voneinander ist so bemessen, dass bei Lastbeaufschlagung der Kupplung unter den der jeweiligen Dimensionierung entsprechenden Normalbedingungen sich die Gummilasche 5 gerde zumindest angenähert so weit dehnt, dass dann alle Zapfen der Kupplung zumindest im wesentlichen einen gleichen Winkelabstand voneinander aufweisen, also jeder Zapfen der einen Kupplungshälfte ungefähr winkelhalbierend zwischen jeweils zwei benachbarten Zapfen der gegenüberliegenden anderen Kupplungshälfte steht.

Zur Übertragung praktisch unbegrenzt grosser Drehmomente trotz weichem Anfahrverhalten der Kupplung ist in jede der Gummilaschen 5 eine in sich geschlossene Bolzenkette 6 einvulkanisiert. Die Länge der Bolzenkette 6 ist so bemessen, dass sie die beiden Knüpfösen der Gummila-

sche 5 mit Abstand aussen umgreift, ohne jedoch an irgendeiner Stelle aus der Gummilasche 5 herauszutreten. Dabei ist die Bolzenkette 6 vorzugsweise in der entspannten Gummilasche 5 so angeordnet, dass ihre Glieder insbesondere zwischen den beiden einander gegenüberliegenden Scheitelpunkten auf den Aussenseiten der Hülsen bzw. Zapfen 3, 4 nicht gestreckt, sondern gewinkelt verlaufen. Als besonders günstig wird dabei ein Kettenverlauf im entspannten Elastomer angesehen, bei dem die Bolzenkette 6 um die Knüpföffnungen bzw. um die Zapfen 3, 4 herum zumindest im wesentlichen gestreckt auf einem Kreisbogen verläuft und zwischen diesen beiden Scheitelpunkten des Kettenverlaufs mit zueinander gewinkelten Gliedern angeordnet ist. Bei dieser Art der Bewehrung der Gummilasche 5 bleibt die gummielastische Dehnbarkeit der Lasche 5 voll erhalten und wird das Elastomer der Gummilasche 5 im Bereich der Anlage an der Mantelfläche der Zapfen 3, 4 dadurch nur minimal belastet, dass nicht zwischen der Innenfläche der Knüpföffnung der Lasche 5 und dem Mantel der Zapfen 3, 4 noch zusätzlich Flächengleitprozesse auftreten durch ein Glattziehen der Bewehrungskette 6.

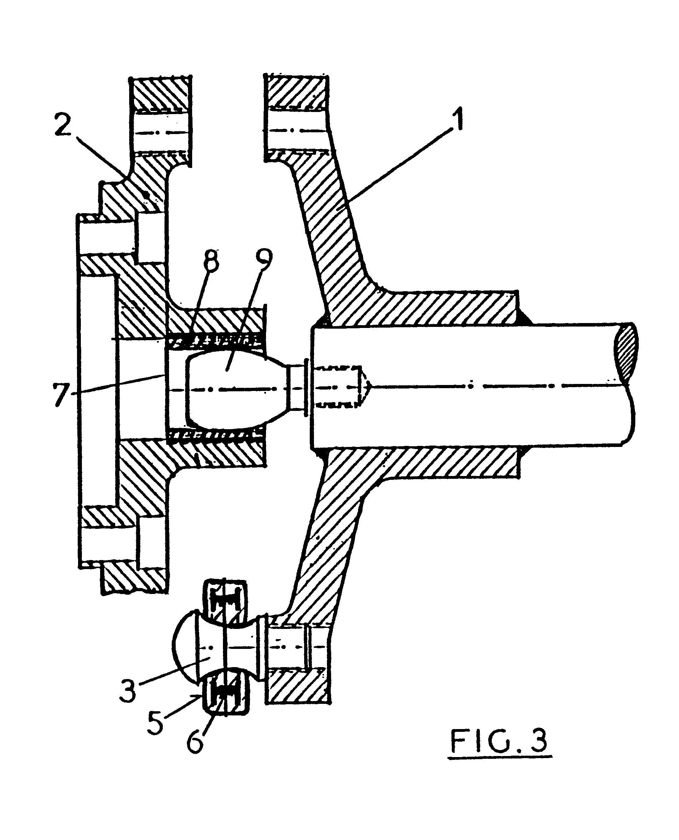

In der insbesondere aus Fig. 3 ersichtlichen Weise sind die beiden Kupplungshälften 1, 2 durch ein Zentrierlager miteinander verbunden, bei dem die Zentrierlagerbuchse 7 zur Schwingungsisolation zwischen den beiden Kupplungsteilen, insbesondere zur Körperschallisolation, mit einem Elastomer 8 ausgekleidet ist, und bei dem, der Zentrierzapfen 9 birnenförmig ausgebildet ist, um dadurch die durch die gelenkig an den Zapfen 3, 4 angelagerten Gummilaschen 5 erzielte hohe Beweglichkeit der Kupplung in allen drei räumlichen Freiheitsgraden nicht wieder aufzuheben oder einzuschränken.

## Patentansprüche

1. Kardanische Laschenkupplung, bei der die beiden Kupplungshälften (1, 2) jeweils mit gleichem Winkelabstand voneinander angeordnete axial ausgebildete Zapfen (3,4) aufweisen, die, im gleichen Winkelabstand voneinander, für die beiden Kupplungshälften alternierend verzahnt zumindest im wesentlichen in ein und der gleichen Radialebene liegen und mit vorzugsweise bewehrten, elastischen Laschen (5) untereinander verbunden sind, wobei jeder Zapfen (3, 4) jeweils einer Kupplungshälfte (1, 2) mit nur einem Zapfen (4, 3) der jeweils anderen Kupplungshälfte (2, 1) über die elastische Lasche verbunden ist, dadurch gekennzeichnet, dass die Zapfen (3, 4) im Angriffs- und Lagerbereich der Laschen (5) zumindest im wesentlichen die Form eines einschaligen Rotationshyperboloids haben, und die elastischen Laschen (5) so ausgebildet sind, dass sie über die Zapfen (3, 4) geknüpft werden können.

2. Laschenkupplung nach Anspruch 1, dadurch gekennzeichnet, dass die Laschen (5) mit Ösen oder Öffnungen auf den Zapfen (3, 4) gelagert sind, deren Innenflächen der Zapfenmantelfläche flächenbündig, aber beweglich anliegen und im entspannten Zustand der Lasche flächenkomplementär zur Zapfenmantelfläche im Lagerbereich ausgebildet sind.

3. Laschenkupplung nach einem der Ansprüche 1 oder 2, dadurch gekennzeichnet, dass die Laschenarmierung eine in sich geschlossene Gliederkette (6) ist.

4. Laschenkupplung nach Anspruch 3, dadurch gekennzeichnet, dass die Gliederkette (6) eine Gelenkkette, insbesondere eine Bolzenkette oder eine Buchsenkette aus Stahl ist.

5. Laschenkupplung nach Anspruch 4, dadurch gekennzeichnet, dass zumindest einzelne Glieder der als Bewehrungskette (6) ausgebildeten Gliederkette in der Lasche (5) nicht, zumindest nicht vollständig gestreckt zueinander ausgerichtet sind, wenn sich die Lasche im entspannten Zustand befindet.

6. Laschenkupplung nach einem der Ansprüche 1 bis 5, gekennzeichnet durch ein Zentrierlager mit gummiausgekleideter (8) Buchse (7) und tonnen- oder birnenförmigem Zentrierzapfen (9).

7. Laschenkupplung nach einem der Ansprüche 1 bis 6, dadurch gekennzeichnet, dass die Laschen (5) auf die Zapfen (3, 4) aufgeknüpft sind.

8. Verwendung der Laschenkupplung nach einem der vorhergehenden Ansprüche im Kraftfahrzeugbau zur Schallisolation, Schwingungsdämpfung und zur Kompensation axialer, radialer und knickwinkliger montage- und/oder betriebsbedingter Koaxialabweichungen der Eingangs- und der Ausgangswelle zueinander.

## Claims

1. Privoted link universal joint comprising two joint halves (1, 2) having axial oriented pivots (3, 4) which are located at the same angle distance to each other and while in view of the joint halves indenting alternatingly are positioned at least essentially in one and the same radial plane at the same angle distance to each other and are joined by elastic, preferably armed, clips (5) connecting each pivot (3, 4) of each joint half (1, 2) only to one pivot (4, 3) of the other joint half (2, 1), characterized in that the pivots (3, 4) in the attack and bearing region at least essentially are shaped as one-shelled hyperboloid of revolution and that the elastic clips (5) are shaped in that way, that they can be knotted onto the pivots (3, 4).

2. Pivoted link joint of claim 1, characterized in that the clips (5) have eyes or openings for resting on the pivots (3, 4), the inner surface of which sit close but movable on the surface area of the pivot and is shaped complementary to the surface area of the pivot when there is no deformation stress acting on the clip.

3. Pivoted link joint of claim 1 or 2, characterized in that the clip armor is a link chain closed in itself (6).

4. Pivoted link joint of claim 3, characterized in that the link chain (6) is a roller chain particular a pin chain or a bush chain made of steel.

5. Pivoted link joint of claim 4, characterized in that at least single links of the link chain, which is shaped as armored chain, at least are not oriented completely stretched to each other, when there is no deformation stress acting on the clip.

6. Pivoted link joint of one of claims 1 to 5, characterized by a locating bearing having a bush (7) with a rubber lining (8) and a barrel- or pear-shaped center pivot (9).

7. Pivoted link joint of one of claims 1 to 6, characterized in that the clips (5) are knotted onto the pivots (3, 4).

8. The use of the pivoted link joint of one of the foregoing claims in motor vehicle construction for sound insulation, vibration damping and compensation of axial, radial and buckling angle-like installation- and/or service-depending coaxial deviation of the input shaft and the output shaft in view of each other.

**Revendications**

1. Joint universel à biellettes, dans lequel les deux moitiés (1, 2) de l'accouplement comportant chacune des tenons (3, 4) qui sont orientés dans le sens axial et situés à la même distance angulaire les uns des autres et qui, en étant à la même distance angulaire les uns des autres et indentés alternativement pour les deux moitiés de l'accouplement, sont disposés essentiellement dans un même plan radial et sont reliés les uns aux autres par des biellettes élastiques (5), de préférence armées, chaque tenon (3, 4) de chacune des moitiés d'accouplement (1, 2) n'étant relié par la biellette élastique qu'à un seul tenon (4, 3) de l'autre moitié (2, 2) d'accouplement caractérisé en ce que, dans la zone d'attaque et d'appui des biellettes (5), les tenons (3, 4) ont au moins sensiblement la forme d'un hyperboloïde de révolution à une nappe et en ce que les biellettes (5) ont une forme telle qu'elles peuvent être enfoncées sur les tenons (3, 4) comme sur des boutons.

2. Joint universel à biellettes, selon la revendication 1, caractérisé en ce que les biellettes (5) sont montées sur les tenons (3, 4) par des oeillets ou des ouvertures dont les surfaces intérieures s'appliquent contre la surface extérieure du tenon en épousant la forme, mais en pouvant se déplacer et ont une forme telle qu'à l'état détendu la surface de la biellette est complémentaire de la surface du tenon.

3. Joint universel à biellettes, selon l'une des revendications 1 ou 2 caractérisé en ce que l'armature des biellettes est constituée par une chaine fermée (6).

4. Joint universel à biellettes, selon la revendication 3, caractérisé en ce que la chaine (6) est une chaine articulée, notamment une chaine à chevilles ou une chaine à douilles en acier.

5. Joint universel à biellettes, selon la revendication 4, caractérisé en ce que certains éléments au moins de la chaine articulée constituéer par une chaine armée (6) ne sont pas, lorsque la biellette est à l'état détendu, étendus complètement les uns par rapport aux autres dans la biellette (5).

6. Joint universel à biellette selon l'une des revendications 1 à 5, caractérisé en ce qu'il comprend un palier de centrage comportant une douille (7) ayant un revêtement (8) en caoutchoux et des tenons (9) en forme de tonneaux ou de poires.

7. Joint universel à biellettes, selon l'une des revendications 1 à 6, caractérisé en ce que les biellettes (5) sont enfoncées sur les tenons (3, 4) comme sur des boutons.

8. Utilisation du joint universel à biellettes, selon l'une des revendications 1 à 7, dans l'industrie automobile pour l'isolation phonique, l'amortissement des vibrations et la compensation réciproque des écarts coaxiaux de l'arbre d'entrée et de l'arbre de sortie qui se produisent au cours du montage ou du fonctionnement dans le sens axial ou radial ou suivant un angle de pliage.

EP 0 167 654 B1

FIG.1

FIG.2

7

FIG. 3